# EUROPEAN PATENT SPECIFICATION

(11) **EP 0 343 363 B1**
(45) Date of publication and mention of the grant of the patent: **13.12.1995**
(21) Application number: 89106664.9
(22) Date of filing: 14.04.1989
(51) Int. Cl.: H02P 7/62, H02P 1/52

(54) **Motor control system**
Motorregelsystem
Système de régulation d'un moteur

(30) Priority: 27.05.1988 JP 131012/88
(43) Date of publication of application: 29.11.1989
(73) Proprietor: YAMAMOTO ELECTRIC CORPORATION, Sukagawa-shi Fukushima-ken (JP)
(72) Inventor: Soeda, Katsuji, Sukagawa-shi (JP); Hishinuma, Nitaro, Oaza Wada Sukagawa-shi (JP)
(74) Representative: Tiedtke, Harro, Dipl.-Ing.

(56) References cited:
- DE-A- 2 156 389
- US-A- 4 804 900
- PATENT ABSTRACTS OF JAPAN vol. 11, no. 325 (E-551)(2772) 22 October 1987, & JP-A- 62 114494 (YAMAMOTO DENKI KOGYO K. K.) 26 May 1987,
- IECON'87 Proc. Int. Conf. on Ind. Elec., Cont. and Instr. 1987 vol. 1, 06 November 1987, New-York, US pages 438-447; T.E. Attia et al.: "Complete study for the performance of self controlled pm synchronous motor".

## Description

The present invention relates to a motor control system, or more in particular to a motor control system low in cost and suitable for speed regulation with simple configuration.

A motor such as a sync motor does not generate any rotational torque at other than a sync speed and has a starting torque substantially equal to zero. As a result, a self-starting method with a starting (brake) winding or a starting auxiliary motor is required.

The sync motor is a constant-speed motor adapted for rotating at a sync speed and is difficult in speed control. By changing the sync speed, however, the speed control is possible. Specifically, the speed control of this type of motor can be attained by changing either the frequency of a power supply or the number of poles thereof. The method with a changing power frequency is applicable to a motor operated with an exclusive power generator. The method with the number of poles changed, on the other hand, requires the number of poles of the armature windings and the number of fields to be switched at the same time.

The above-mentioned conventional sync motor, however, is difficult to start, and requires a special starter, thereby making the configuration of the sync motor complicated and its cost high. In a sync motor, the load current of which is comparatively small but increases with the decrease in speed, it is difficult to regulate the speed thereof over a wide range from high to low levels. Further, if the sync motor is to be decreased in size and improved in efficiency, a strong permanent magnet is required as a rotor thereof. For this purpose, a very expensive rare earth magnet is used.

In order to resolve these problems, the present applicant has suggested "A Synchronous Motor Control System" (See JP-A-62-114494). In this sync motor control system, a conduction phase operation circuit compares an output of a three-phase rectangular wave oscillation circuit controlled by a frequency control signal with a phase control signal thereby to control the conduction phase and the start of a sync motor automatically. The conduction phase operation circuit used in such a conventional control system cuts off the current input not required for torque by differentiating a current value. With the position of the rotor magnet being changed forward or backward with load, however, accurate control has actually been sometimes impossible.

### SUMMARY OF THE INVENTION

A first object of the present invention is to provide a sync motor control system in which the aforementioned technical problems are solved and in which smooth automatic operation is possible over a wide range from start to high speed of a sync motor with a simple starter with the speed thereof controllable over a wide range from high to low speeds.

A second object of the present invention is to provide, in view of the aforementioned problem point, a low-cost control system for the sync motor with a simple configuration capable of a sharp start-up and stable operation and speed regulation.

In order to achieve the above-mentioned object of the invention, there is provided according to a second aspect of the invention a control system for a sync motor, comprising: a multi-phase sync motor, a multi-phase rectangular wave oscillation circuit and means for detecting the position of magnetic poles of the rotor of the multi-phase sync motor and producing a position signal, characterized by a first DC voltage generation circuit for generating a DC voltage proportional to the rotational frequency of the rotor, a second DC voltage generation circuit for generating a DC voltage corresponding to a predetermined frequency from the multi-phase rectangular wave oscillation circuit, a comparator circuit for comparing output signals of the first and second DC voltage generation circuits and producing an output signal only when the DC voltage of the latter exceeds that of the former, and a drive control circuit for producing a signal causing the excitation drive circuit of the motor to drive the motor as a brushless motor in accordance with an output signal from the magnetic pole position detection means in the presence of an output signal supplied from the comparator circuit, said drive control circuit causing the excitation drive circuit of the motor to produce a signal for driving the motor as a sync motor in accordance with an output signal from the multi-phase rectangular wave oscillation circuit in the absence of an output signal supplied from said comparator circuit.

In the aspect of the invention mentioned above, when a power switch is turned on, an oscillation circuit is energized to generate a predetermined frequency, which is taken out as corresponding DC voltage at a second DC voltage generation circuit and is applied to a comparator. The voltage generated at a magnetic pole position detection means, on the other hand, is taken out as a DC voltage proportional to the rotational frequency of the rotor at a first DC voltage generation circuit and is also applied to the comparator. The comparator, comparing the two input voltages thereto, produces an output signal only when the voltage on rotor side is lower than the voltage on the oscillation circuit side, that is, when the rotor speed fails to reach the sync speed. This output signal is applied to a drive control circuit thereby to start the motor as a brushless motor. When the voltage on rotor side reaches the same level as that on the oscillation circuit, that is, when the rotational speed of the rotor reaches the sync speed, the comparator does not produce any output signal, but the motor is driven as a sync motor on the basis of a sync motor drive signal sent from the oscillation circuit to the drive control circuit. As a result, at the time of starting, the motor is driven according to the starting characteristic of a brushless motor, and when a sync speed is reached, is switched to a sync motor, thus making it possible to start up the motor sharply and drive it in stable manner.

In the case where power is switched on in the control system mentioned above, however, the frequency of the three-phase rectangular wave oscillation reaches a designated value only after the lapse of a certain length of time (one second divided by several minutes), and therefore a false operation may develop in switching from brushless motor to synchronous mode. Further, the second and first DC voltages obtained by differentiation and integration from the three-phase oscillation frequency and the rotational frequency respectively as used for switching may develop a ripple in the value thereof or delayed in time, sometimes causing an unstable switching operation.

A third object of the present invention is to provide a motor control system for solving the above-mentioned problem.

According to a further aspect of the present invention, in order to achieve the third object, there is provided a control system for a sync motor, comprising a motor means for detecting the position of the magnetic poles of the rotor of the motor and producing a position signal, a multi-phase rectangular wave oscillation circuit for oscillating a multi-phase rectangular wave, and a frequency multiplier for multiplying the frequency of the position signal to a predetermined frequency and producing a multiple frequency signal, characterized by a clear circuit for producing a phase of the multi-phase rectangular wave signal as a clear signal, a stepwise wave generation circuit for generating a stepwise wave adapted to be cleared by the clear signal, said stepwise wave being charged stepwisely with the same frequency as the multiple frequency in accordance with the multiple frequency signal, a drive signal switching circuit for applying to the motor as a drive signal selected one of a signal corresponding to the position signal and a phase difference signal between the multi-phase rectangular wave signal and the position signal, a speed detection circuit for producing a first signal before the level of the stepwise wave from the stepwise wave generation circuit reaches a predetermined value, and a second signal when the level reaches the predetermined value, and means for designating selected one of a validity and invalidity of the drive signal produced from the drive signal switching circuit, the drive signal switching circuit producing a signal corresponding to the position signal in response to the first signal thereby to drive the motor in brushless mode, and the phase difference signal in response to the second signal thereby to drive the motor in sync mode.

As a result, before a predetermined speed is reached, the motor is driven in brushless mode by a drive signal produced from a signal corresponding to the position signal, and when the predetermined speed is reached, the motor is switched automatically from brushless mode to sync mode in stable manner by a drive signal produced from a phase difference signal between a multi-phase rectangular wave oscillation signal and the position signal.

Further, the control system according to the invention preferably comprises a second speed detection circuit for producing a third signal when the level of the stepwise wave from the stepwise wave generation circuit exceeds a predetermined value, the drive signal from the drive signal switching circuit being invalidated in response to the third signal, whereby if the motor started increases in speed and exceeds a predetermined speed, the drive signal is automatically de-energized thereby to reduce the motor speed to the predetermined level for a sync mode of operation.

Furthermore, the control system preferably comprises second instruction means interposed between the output of the position detection means and the input of the multiplier for giving an instruction to prevent the position signal selectively from being applied to the multiplier, thus making it possible to operate the motor only in brushless mode.

Furthermore, the control system preferably comprises third instruction means for giving an instruction to invert the phase of the position signal from the position detection means selectively thus making it possible to drive the motor in opposite direction selectively.

### BRIEF DESCRIPTION OF THE DRAWINGS

Fig. 1 is a block diagram showing a sync motor control system according to an embodiment of the present invention.

Fig. 2 is a typical circuit diagram of the sync motor control system shown in Fig. 1.

Figs. 3 and 4 show waveforms produced at various parts of a three-phase rectangular wave oscillation circuit.

Fig. 5 is a diagram showing waveforms produced at various parts of a frequency regulation circuit and conduction phase regulation circuit.

Fig. 6 shows waveform produced at various parts of an conduction phase operation circuit.

Fig. 7 is a circuit diagram showing the essential parts according to an embodiment of a motor control system.

Fig. 8 is a block diagram showing a embodiment of the present invention.

Fig. 9 is a circuit diagram showing the essential parts of the embodiment shown in Fig. 8.

Fig. 10 is a block diagram showing another embodiment of the present invention.

Fig. 11 is a circuit diagram of the embodiment shown in Fig. 10.

Fig. 12 shows signal waveforms produced at various parts in Fig. 11.

### DESCRIPTION OF THE PREFERRED EMBODIMENTS

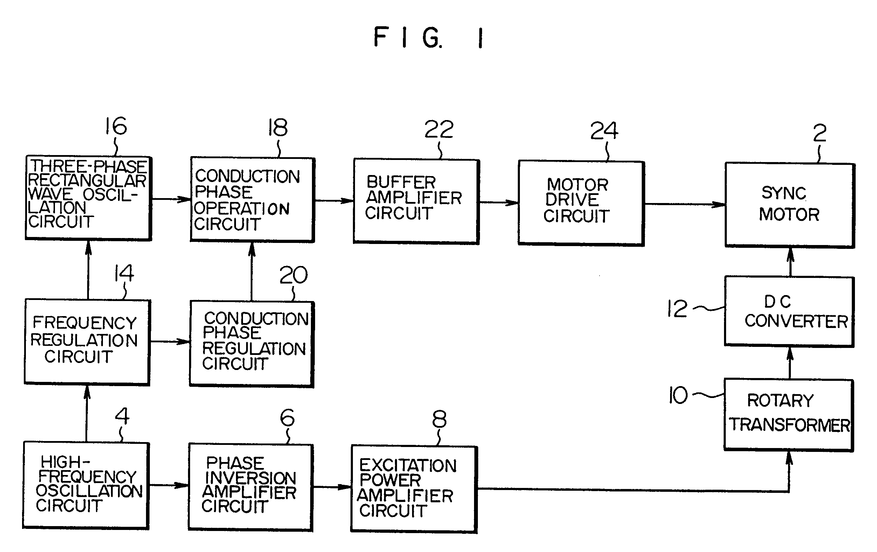

Prior to a motor control system according to the present invention, a conventional motor control system to which an embodiment of the present invention is applicable will be explained with reference to Figs. 1 to 6.

Fig. 1 is a block diagram showing a control system for a sync motor to which an embodiment of the present invention is applicable as disclosed in JP-A-62-114494. In Fig. 1, reference numeral 2 designates a multi-phase sync motor such as a three-phase sync motor. Numeral 4 designates a high-frequency oscillation circuit with an oscillation frequency of 10 KHz. This high oscillation frequency is required to supply an excitation current to the armature of the motor 2 efficiently with a compact device. This oscillation signal is applied to a frequency regulation circuit 14 and used as a motor starting signal. At the same time, the oscillation signal is applied to a phase reversion amplifier circuit 6 thereby to produce a signal of positive and negative phases. An output signal of the amplifier circuit 6 is amplified at an excitation power amplifier circuit 8 thereby to excite the primary side of a rotary transformer 10. The rotary transformer 10 comprises a high-frequency transformer for supplying a high frequency amplified at the excitation power amplifier circuit 8 to the rotor of the motor 2 in a contactless manner with a high efficiency. The primary side of the rotary transformer 10 is fixed, while the secondary side thereof is mounted on the spindle of the motor 2 and is adapted to rotate with the rotor thereof.

A high-frequency signal supplied from the secondary of the rotary transformer 10 is rectified at a DC converter 12, that is, at a full-wave rectifier and then supplied to the armature coil of the rotor.

Numeral 16 designates a three-phase rectangular wave oscillation circuit. A conventional three-phase rectangular wave oscillation circuit, in which a ring counter oscillator or the like is used to oscillate a continuous rectangular wave and the resulting waveforms are combined to form a three-phase rectangular wave, is complicated in circuit configuration.

Numeral 14 designates a frequency regulation circuit for controlling the oscillation frequency of the three-phase rectangular wave oscillation circuit 16. Specifically, the oscillation frequency of the three-phase rectangular wave oscillation circuit 16 is controlled thereby to undergo a change from low to high frequencies at the time of starting the motor in response to an output signal from the high-frequency oscillation circuit 4, and at the same time the frequency of a stable three-phase rectangular wave is rendered changeable over a wide range in order to control the motor speed over a wide range.

A conduction phase regulation circuit 20 serves the purpose of applying to the conduction phase operation circuit 18 a signal to control the phase of an output rectangular wave of the three-phase rectangular wave oscillation circuit 16 in response to an output signal of the frequency regulation circuit 14 thereby to control the phase of a three-phase rectangular wave.

In the prior art sync motors, the load current is small and a certain degree of efficiency is obtained in high-speed ranges for the same load torque, whereas the load current is increased acceleratively with the decrease in speed, thus rendering the motor unserviceable. As a result, the sync motor could not be regulated continuously.

The conduction phase operation circuit 18 controls the phase of a three-phase rectangular wave signal in such a manner as to improve the efficiency of the motor 2 in response to a phase control signal from the conduction phase regulation circuit 20 and applies an output thereof to a buffer amplifier circuit 22.

The buffer amplifier circuit 22 is an amplifier circuit for alleviating the risk of unstable phase control which may be caused by a sudden load change resulting from the fact that a motor drive circuit 24 is directly coupled with the conduction phase operation circuit 18. This circuit therefore includes an ordinary inversion amplifier.

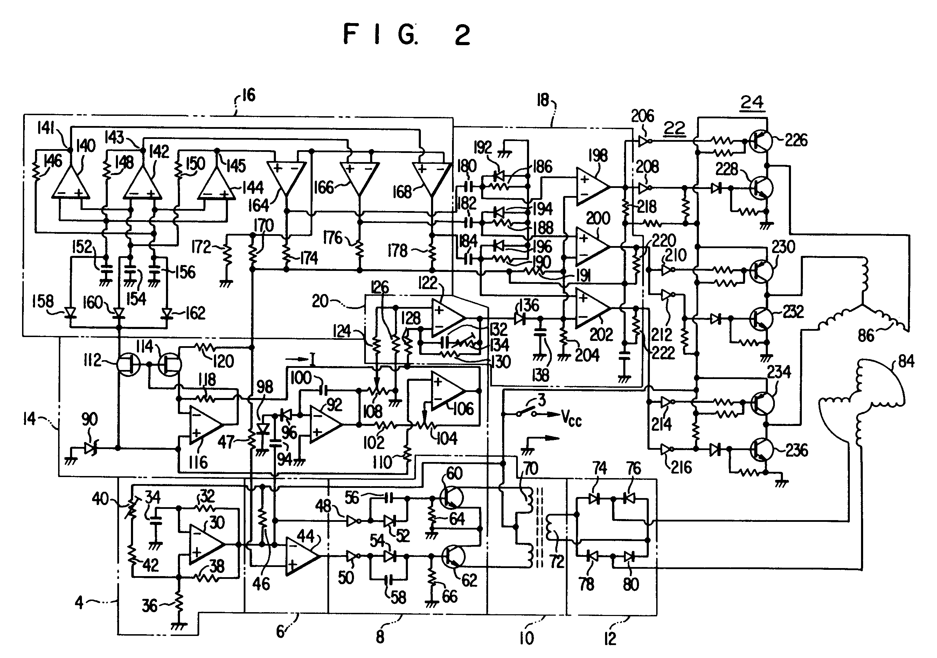

Fig. 2 is a diagram showing a circuit of a typical control system for the sync motor 2 of Fig. 1.

A high-frequency oscillation circuit 4 includes an operational amplifier 30, the inverted input of which is connected to a capacitor 34 on the one hand and to an output terminal through a resistor 32 on the other. The non-inverted input of the amplifier 30 is connected to a DC power supply Vcc through a resistor 42, a semi-fixed resistor 40 and a power switch 3.

The oscillation frequency is determined by the value of the resistor 32 and the capacity of the capacitor 34, and is regulated at several tens of KHz in consideration of the core material of the rotary transformer 10 or the like. Also, the semi-fixed resistor 40 is for fine adjustment of the duty cycle of the oscillation frequency to about 50%.

A phase inversion amplifier circuit 6 includes an operational amplifier 44, the inverted input of which is impressed with an oscillation voltage from the operational amplifier 30, while the non-inverted input thereof is connected to a zener diode 90 and impressed with a constant voltage of an amplitude approximately half that of the oscillation voltage. The output waveform from the operational amplifier 44 thus has a phase opposite to the output waveform applied from the operational amplifier 30 to the inverter 48. These high-frequency signals of forward and reverse phases are applied to capacitors 56, 58 of the excitation power amplifier circuit 8 through inverters 48 and 50 respectively which function as a buffer amplifier. The capacitors 56 and 58 make up pull-up capacitors for keeping rectangular the waveforms of high-frequency signals of forward and reverse phases respectively, and outputs of these capacitors 56 and 58 are supplied to the primary winding of the rotary transformer 10 after being amplified by transistors 60 and 62 respectively.

Diodes 52 and 54 are for blocking the reverse current flow.

The rotary transformer 10 has a ferrite soft core for high frequencies. The primary core and coil of the rotary transformer 12 are secured on the outer periphery of the motor 2, while the secondary core and coil are mounted on the motor spindle and adapted to rotate with the rotor thereof.

A high-frequency signal from the excitation power amplifier circuit 8 is thus induced in the secondary of the rotary transformer 10 and converted into direct current by a DC converter circuit 12 making up a full-wave rectifier circuit including diodes 74 to 80 before being applied to the armature winding 84.

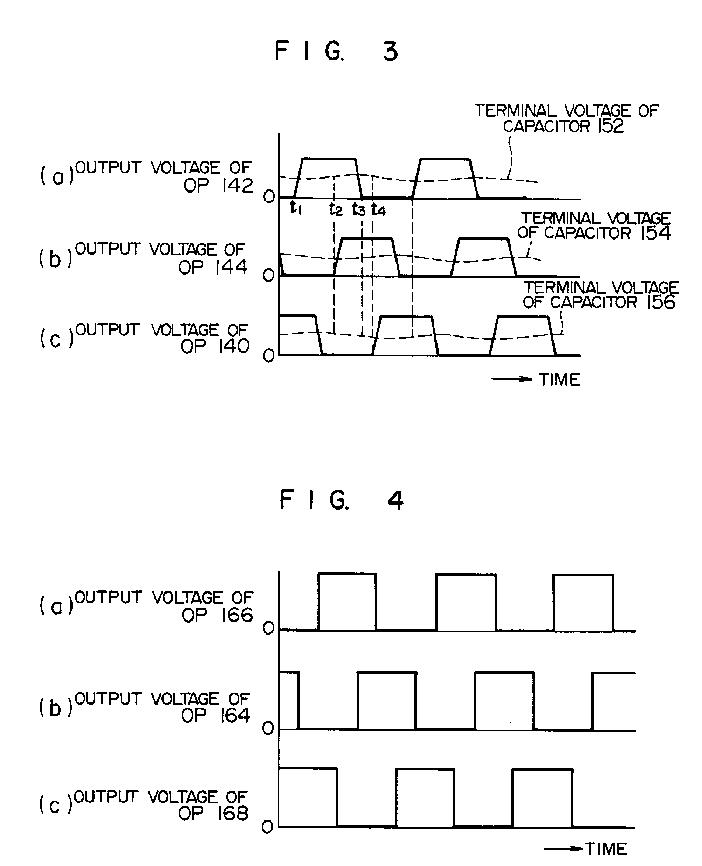

Now, the operation of the three-phase rectangular wave oscillation circuit 16 will be explained. This oscillation circuit 16 provides a simple circuit including three operational amplifiers 140, 142 and 144 for generating a three-phase rectangular wave. First, if the elements are connected in the manner shown and a source voltage is applied thereto, a voltage is produced at a given one of the output terminals of the three operational amplifiers whose characteristics are not exactly identical to each other. Fig. 3 is a time chart showing signal waveforms representing various parts of the oscillation circuit 16.

Assuming that a voltage is produced at the output terminal 143 of the operational amplifier 142, the same voltage is applied through a resistor 148 and a diode 158 to a semi-fixed resistor having an FET 112. The capacitor 152 is charged in accordance with the ratio between the values of the resistor 148 and the FET 112, and has a charge curve dependent on a time constant determined by the capacity of the capacitor 152 and the values of the resistor 148 and the FET 112. As a result, the charge curve is changed with the resistance value of the FET 112. At the same time, the negative terminal of the operational amplifier 140 and the positive terminal of the operational amplifier 144 connected to the positive terminal of the capacitor 152 are also impressed with the charge voltage of the capacitor 152, which increases along the charge curve. The fact that a voltage is produced at the output terminal 143 of the operational amplifier 142 indicates that the negative terminal of the operational amplifier 142 is lower in voltage than the positive terminal thereof. The positive terminal of the operational amplifier 140 is at the same potential as the negative terminal of the operational amplifier 142 and the negative terminal of the operational amplifier 144 is at the same potential as the positive terminal of the operational amplifier 142, so that the positive terminal of the operational amplifier 140 is lower in potential than the negative terminal of the operational amplifier 144. Upon production of a voltage at the output terminal of the operational amplifier 142 at time t₁ as shown in (a) of Fig. 3, however, as explained above, the capacitor 152 is charged, and the terminal voltage thereof increases along a dotted line in (a) of Fig. 3, with the result that the potentials of the negative terminal of the operational amplifier 140 and the positive terminal of the operational amplifier 144 connected to the capacitor 152 also progressively increase in similar fashion. As a consequence, the operational amplifier 140 is held off, while the operational amplifier 144, with the positive terminal having a potential (terminal voltage of the capacitor 152) reaching the potential of the negative terminal (terminal voltage of the capacitor 156) at time point t₂, is energized and the output potential thereof changes to "high" level.

When the output of the operational amplifier 144 becomes "high", the terminal voltage of the capacitor 154 is increased in accordance with a time constant determined by the resistor 150, FET 112 and the capacitor 154 as in the case of the capacitor 152.

As a result, the negative terminal of the operational amplifier 142 and the positive terminal of the operational amplifier 140 connected to the terminal of the capacitor 154 increase in potential after time point t₂, and at time point t₃ when the potential at the negative terminal of the operational amplifier 142 (terminal voltage of the capacitor 154) reaches the potential at the positive terminal thereof (terminal voltage of the capacitor 156), the operational amplifier 142 turns off and the output potential thereof is reduced to "low" level. Charges stored in the capacitor 152 are thus discharged through the diode 158 and an FET 112. The discharge curve involved in this operation is determined by a time constant depending on the resistance value of the FET 112 and the capacity of the capacitor 152.

In this case, the discharge curve is also changed by changing the resistance value of the FET 112, that is, the gate voltage as in the case of the charge curve. At time point t₃, the positive terminal of the operational amplifier 144 is higher in potential than the negative terminal thereof, and a high-level voltage is produced from the output terminal thereof. When the operational amplifier 142 is turned off, however, the terminal voltage of the capacitor 152 begins to decrease so that the potentials of the positive terminal of the operational amplifier 144 and the negative terminal of the operational amplifier 140 progressively decrease.

The potential of the positive terminal of the operational amplifier 140 (terminal voltage of the capacitor 154), on the other hand, is lower than the potential at the negative terminal thereof (terminal voltage of the capacitor 152) and is in off state. After time point t₂, however, the potential at the positive terminal of the operational amplifier 140 begins to increase while the potential at the negative terminal thereof drops. As a result, at time point t₄, the potential at the positive terminal of the operational amplifier 140 reaches that at the negative terminal thereby to turn on the operational amplifier 140. In this way, the operational amplifiers 140, 142 and 144 are turned on sequentially for oscillation of a three-phase rectangular wave.

The oscillation frequency is adjustable by changing the resistance value of the FET 112, that is, the gate voltage. The diodes 158, 160 and 162 are provided for preventing reverse current flow, whereby a single unit of the FET 112 is capable of changing the time constants of three operational amplifiers 140, 142 and 144 and therefore it is possible to prevent variations in duty cycle of the oscillation frequency which otherwise might be caused by variations in resistance.

The outputs of the operational amplifiers 140, 142 and 144 are applied to the positive terminals of the operational amplifiers 168, 166 and 164 corresponding thereto respectively, the outputs of which are applied to the conduction phase operation circuit 18. The negative terminals of the operational amplifiers 164 to 168 are grounded through a resistor 172. The input signals to the amplifiers 164 to 168 are compared with the terminal voltage of the resistor 172, so that the output waveforms of the operational amplifiers 164 to 168 assume three-phase rectangular waves rectified appropriately as shown in Fig. 4.

Now, the operation of the frequency regulation circuit 14 will be explained.

A sync motor 2 is used in this system, and is started in such a manner that a current of very low frequency is applied in initial stage of starting and the frequency is progressively increased until it finally reaches a designated frequency to attain a designated rotational speed. The circuit under consideration is adapted to perform this starting operation automatically.

A rectangular wave signal produced by the high-frequency oscillation circuit 4 is applied through a pump circuit including a capacitor 94 and diodes 96, 98 to the capacitor 100. The terminal on the pump circuit side of the capacitor 100 is connected to the negative terminal of the operational amplifier 92, and the other terminal thereof to the output of the operational amplifier 92. As a result, the potential on the resistor 108 side of the capacitor 100 assumes a satisfactory linear curve along which the voltage increments stepwise each time of application thereto of a rectangular wave signal. The inclination of the stepwise wave is thus adjustable by regulating the values of the capacitors 94, 100, etc. In this way, the output voltage of the operational amplifier 92 increases stepwise from zero up to a level near to the source voltage and is applied through a variable resistor 108 and the resistors 124, 126 to the positive terminal of the operational amplifier 122 on the one hand, and to the negative terminal of the operational amplifier 106 through the resistor 102 and variable resistor 104 on the other.

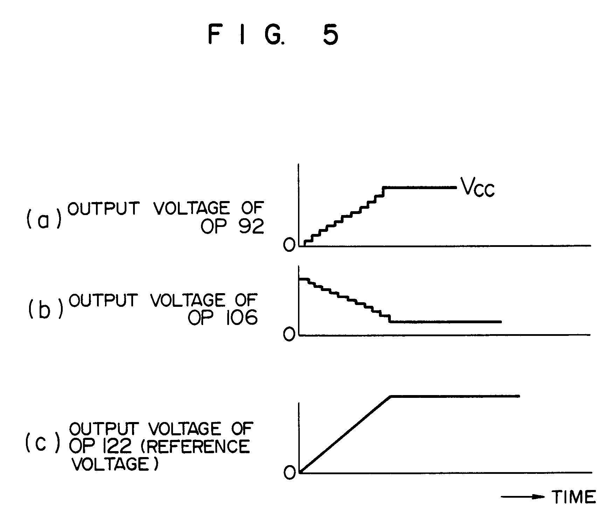

The operational amplifier 106, which is an inverting amplifier capable of variable amplification by a variable resistor 104, functions actually as a reducer for reducing the input level thereof. Outputs of the operational amplifiers 92 and 106 produced as from the time of power throw-in assume waveforms shown in (a) and (b) of Fig. 5. Specifically, the operational amplifier 106 is impressed with a predetermined positive voltage by a zener diode 90 through a resistor 110, so that the output of the operational amplifier 106 is inverted and assumes a stepwise form inclined downwardly as a result of being reduced appropriately by the variable resistor 104.

The output voltage of this operational amplifier 106 is applied to the conduction phase regulation circuit 20 on the one hand and to the source of the FET 114 and the negative terminal of the operational amplifier 116 through the resistor 118 at the same time. The output of the operational amplifier 106 decreases with reference to the anode terminal voltage of the zener diode 90. The drain of the FET 114 is impressed with a source voltage through the resistor 120, and therefore a current I flows from the power supply Vcc to the output terminal of the operational amplifier 106 through the resistor 120, FET 114 and the resistor 118. In the process, the output of the operational amplifier 116 controls the gate voltage of the FET 114 in such a manner that the negative terminal of the operational amplifier 116 may be at zero potential automatically. As a result, the internal resistance of the FET 114 is Vcc/I. The FET 112 thus has the same characteristics and gate voltage as the FET 114 and therefore the internal resistance of the FET 112 is also identical to that of the FET 114. In view of the fact that the output of the operational amplifier 106 decreases stepwise, the current I increases in proportion to the output of the operational amplifier 106, so that the gate voltage to the FET 112 and FET 114 increases, with the result that the internal resistances of both the FETs 112 and 114 decrease. The FET 112 thus functions as a variable resistor as mentioned above. In this way, the oscillation frequency of the three-phase rectangular oscillation circuit 16 is very low in initial stage of power throw-in, followed by gradual increase until a specified frequency. The starting of the sync motor 2 is thus completed automatically. A combination of the FETs 112 and 114 with the operational amplifier 116 permits the frequency change with temperature to be minimized, and adjustment of the variable resistor 104 makes it possible to designate a given value of the minimum output stepwise wave, that is, the maximum value of the oscillation frequency. The gate voltage of the FET 112 corresponds to the frequency control signal mentioned above.

Now, the operation of the conduction phase regulation circuit 20 will be explained. In this circuit, the positive terminal of the operational amplifier 122 is connected to the variable resistor 108 through the resistors 124 and 126 in parallel and is impressed with the stepwise output voltage of the operational amplifier 92. The amplitude value of this input voltage is regulated at the desired value by the variable resistor 108. The negative terminal of the operational amplifier 122, on the other hand, is supplied with the stepwise output voltage of the operational amplifier 106 through the resistor 128. As a result, the operational amplifier 122 functions as a non-inverting amplifier and therefore the difference between the input voltages at the positive and negative terminals thereof is amplified and produced. Such an output voltage has a waveform of a predetermined inclination as shown in (c) of Fig. 5 and is applied as a phase control signal to the conduction phase operation circuit 18. By regulating the voltage applied to the positive terminal of the operational amplifier 122 by means of the resistor 108, therefore, the inclination of the output waveform is changed, thereby to regulate the conduction phase. The output signal of the operational amplifier 122 is calculated and produced in such a manner as to attain the optimum conduction phase automatically with respect to the frequency change with the input at the negative terminal.

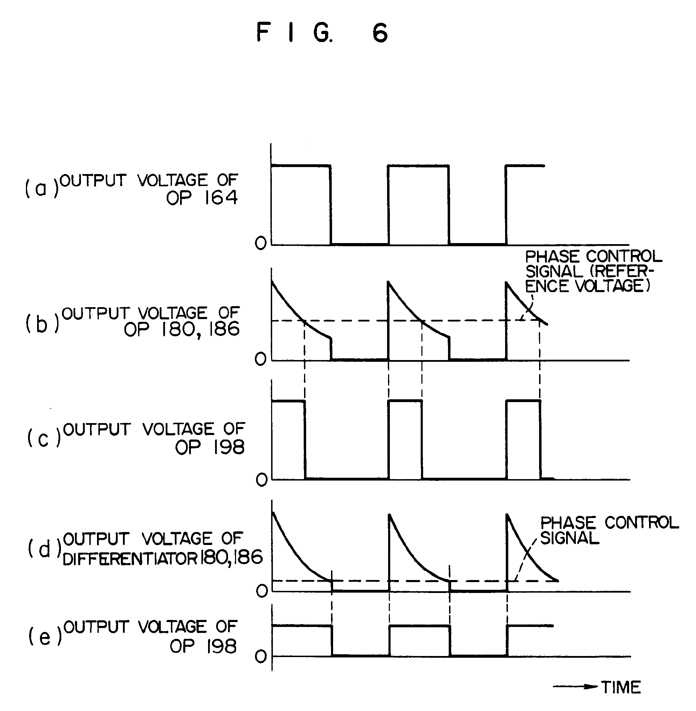

The phase control signal thus obtained is applied through the diode 136 as a reference input voltage to the negative terminals of the operational amplifiers 198, 200 and 202 of the conduction phase operation circuit 18. The positive terminals of the operational amplifiers 198, 200 and 202, on the other hand, are supplied with corresponding output three-phase rectangular waves (Fig. 4) of the operational amplifiers 164, 166 and 168 respectively through the capacitors 180, 182 and 184. One of the three phases of the three-phase rectangular wave, or the output of the operational amplifier 164, for example, will be explained. The output rectangular wave ((b) of Fig. 4 and (a) of Fig. 6) of the operational amplifier 164 is differentiated by a corresponding differentiator including the capacitor 180 and the resistor 186 ((b) of Fig. 6) and is applied to the positive terminal of the operational amplifier 198. The maximum value of the differentiated waveform remains constant with respect to the frequency. The final crest value of each differentiated wave decreases with the decrease in frequency.

In this manner, the positive terminal of the operational amplifier 198 is supplied with the differentiated wave shown in (b) of Fig.6, and the negative terminal thereof with the phase control signal of (c) in Fig. 5 as a reference voltage shown in (b) of Fig. 6. As a result, the operational amplifier 198 produces a rectangular waveform shown in (c) of Fig. 6. This output rectangular wave has a large duty cycle as shown in (e) of Fig. 6 because of the low level of the phase control signal in spite of the small final crest value of the differentiator as shown in (d) of Fig. 6 immediately after start. With the increase in speed, the final crest value of the differentiator increases but the level of the phase control signal substantially follows the final crest value and therefore the duty cycle of the output voltage of the operational amplifier 198 substantially remains at a large value. When the speed reaches a high level, however, the level of the phase control signal is increased beyond the final crest value as shown in (b) of Fig. 6, and, therefore, the duty cycle is also reduced. With the increase in speed, the duty cycle is controlled in this manner. The output frequency of the operational amplifier 198 gradually increases from a very low level after start with the decrease in the output voltage of the operational amplifier 106 ((b) of Fig. 5) of the frequency regulation circuit 14, and the maximum frequency thereof is regulated by the variable resistor 104. The duty cycle of this output frequency, on the other hand, decreases with the increase in the output voltage of the operational amplifier 122 ((c) of Fig. 5) of the conduction phase regulation circuit 20, that is, a reference voltage, so that the minimum duty cycle is regulated by the variable resistor 108. The diodes 192, 194 and 196 are for discharging the charges of the corresponding capacitors 180, 182 and 184 respectively with rapidity when the input voltage from the three-phase rectangular wave oscillation circuit 16 becomes zero.

Outputs from the operational amplifiers 198, 200 and 202 are applied through the buffer amplifier circuit 22 and the motor drive circuit 24 to the field winding 86 of the sync motor 2.

The sync motor control system configured as described above has the effects mentioned below.

In starting the motor 2, the excitation frequency for the motor 2 is increased along a curve of a predetermined gradient up to a high frequency from a very low frequency with the decrease in the output voltage of the operational amplifier 106, and the rise time from low speed to maximum speed is predetermined, thereby permitting stable starting operation. This is in view of the fact that a three-phase rectangular wave oscillation circuit 16 effects an always stable oscillation of a three-phase rectangular wave from low to high frequency, that the rise time of the oscillation is kept constant by the linearity of the output stepwise wave of the operational amplifier 106 and that the maximum frequency is determined by the resistor 104.

The motor 2 is capable of producing a substantially constant rotational torque from low to high speeds by calculating and controlling the load current of the motor 2 appropriately.

In a sync motor 2 using a rectangular wave, the load current which is very large in a low speed range decreases progressively with the increase in speed, and therefore continuous control from high to low speeds would be difficult for the motor 2 if the specification remains the same. The current that does not contribute to the torque is calculated by a conduction phase operation circuit 18, and the conduction is effected by the related phase thereby to attain automatic control with a phase conduction angle always optimal to the frequency. As a result, a substantially constant load current and load torque are maintained over the speed range from high to low, thus assuring a highly efficient operation.

Further, in view of the fact that the rotor is excited and power is supplied in contactless manner by use of a high-frequency rotary transformer 10, the sync motor 2 according to the present embodiment is small in size and high in efficiency while at the same time producing a strong magnetic field for an improved overall efficiency of the motor 2.

Since the high-frequency signal supplied to the rotary transformer 10 is also applied to a frequency regulation circuit 14, a common high-frequency oscillation circuit 4 serves the purpose.

Instead of rectifying an output frequency of a high-frequency oscillation circuit 4 by use of a rotary transformer 10 and supplying the rotor of the motor 2, an ordinary permanent magnet may make up the rotor core.

Furthermore, the present embodiment is not limited to the aforementioned three-phase sync motor but is applicable also to the two- or four-phase sync motor with equal effect by changing the phases of the operational amplifier 142, the capacitor 152 and the diode 158 of the rectangular wave oscillation circuit 16 appropriately in accordance with the number of phases involved.

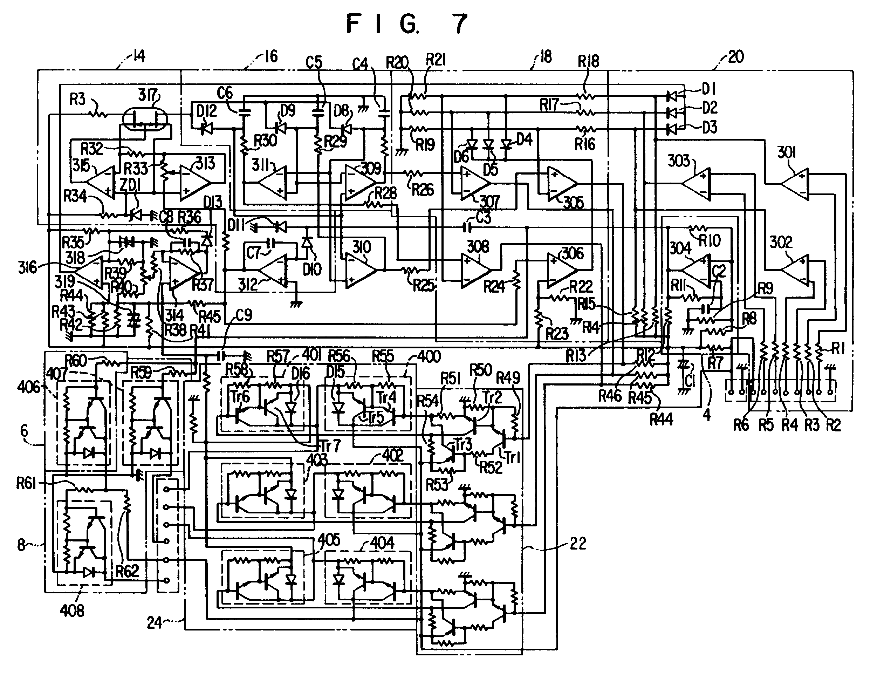

Fig. 7 is a circuit diagram showing another embodiment of a motor control system.

The block configuration of this embodiment is identical to that of the conventional control system of Fig. 1 except that the conduction phase operation circuit 18 is improved.

In Fig. 7, numerals 301 to 316 designate operational amplifiers, numeral 317 a field effect transistor (FET), numerals 318, 319 silicon bilateral switches (SBSs), numerals 400 to 408 compose circuits 6,8 and 24, Tr1 to Tr7 transistors, R1 to R62 resistors, D1 to D13 diodes, ZD1 a zener diode, and C1 to C3 capacitors. The operation of this circuit will be explained below.

In the control system disclosed in JP-A-62-114494, an output rectangular wave of a three-phase rectangular wave oscillation circuit 16 is differentiated by a differentiator to cut off (an extraneous) current input unrequired for the torque. The maximum value of the differentiated waveform remains constant with respect to the frequency, while the final crest value of each differentiated wave decreases with the decrease in the frequency. Since relative positions of the rotor and stator change with load, however, it is not sufficient to control the oscillation frequency linearly along a stepwise waveform by a frequency control signal, because the load current flows excessively at a given time point.

According to the embodiment under consideration, at least a position detector such as a Hall sensor with a Hall element (not shown) is disposed on the PT primary of the stator box of the sync motor 2 to detect relative positions of the rotor and the stator and the resulting position detection signal is applied through the resistors R1 to R6 to the operational amplifiers 301 to 303 for position calculation and control, thereby permitting accurate speed control from low to high speed levels.

Three Hall sensors are used for three phases, and the number and positions of them are changed in accordance with the number of phases (such as two or four) involved.

In this way, according to this embodiment, at least a Hall sensor for detecting the rotor position is used to effect phase calculation and control by a position detection signal, and therefore more accurate operation control is performed than in the conventional control systems using only the differentiation of a current value by a differentiator.

As explained above, according to the embodiment under consideration, a position detection signal from a Hall sensor is compared for calculation with a phase control signal, so that a simple starter makes possible a smooth automatic operation of a sync motor 2 from the start to a high speed range, while at the same time assuring a high-performance speed control over a wide range from high to low speeds.

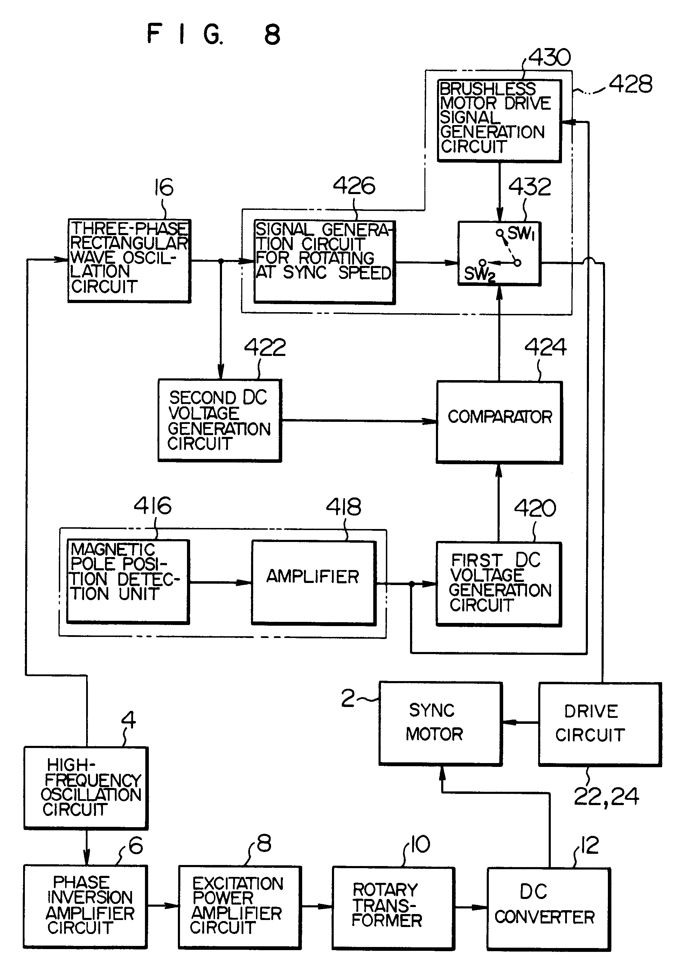

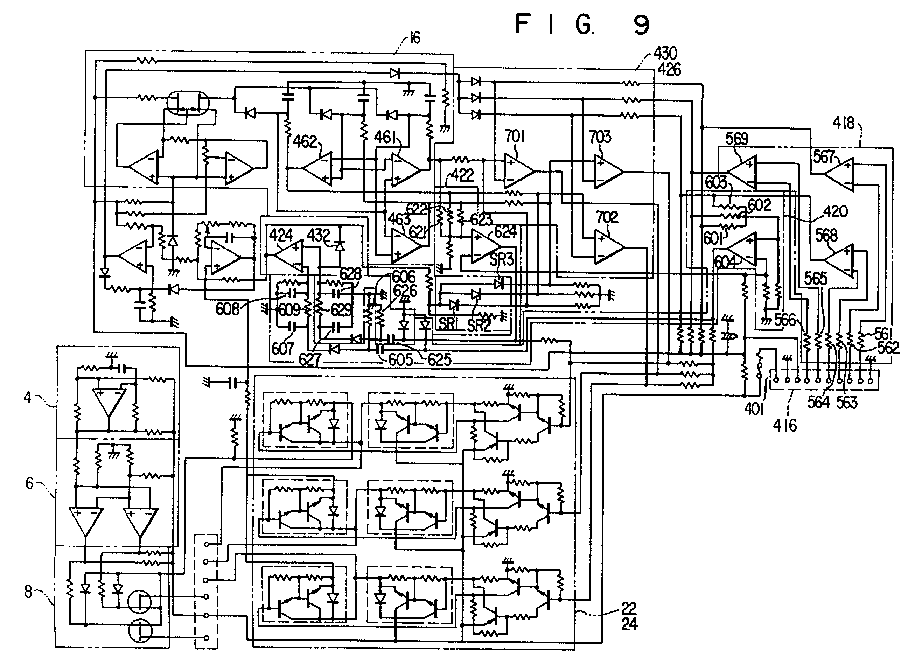

Another embodiment of the present invention will be explained with reference to Figs. 8 and 9.

A block diagram of a sync motor control system according to the present embodiment is shown in Fig. 8.

In Fig. 8, numeral 2 designates a multi-phase sync motor which is provided by a three-phase sync motor in the present case. The present invention, however, is not confined to such a motor but is applicable with equal effect to sync motors of two and four phases. Numeral 4 designates a high-frequency oscillation circuit with an oscillation frequency of several tens of KHz. In order to supply an excitation current efficiently to the motor armature by means of a compact device, the oscillation frequency is set to a high level. This high frequency is supplied to a three-phase rectangular wave oscillation circuit 16 and at the same time to a phase inversion amplifier circuit 6 thereby to produce signals of forward and opposite phases.

The three-phase rectangular wave oscillation circuit 16 oscillates at a high frequency signal corresponding to a sync speed in response to an output signal from the high-frequency oscillation circuit 4. An output signal of a predetermined frequency from the three-phase rectangular wave oscillation circuit 16 is applied to a drive signal generation circuit 426 for rotating the motor 2 at sync speed on the one hand and to a second DC voltage generation circuit 422 described later on the other.

Further, an output signal of the phase inversion amplifier circuit 6, after being amplified by an excitation power amplifier circuit 8, is used to excite a rotary transformer 10. Numeral 12 designates a DC-converter for rectifying a high frequency signal applied thereto from the rotary transformer 10 and supplying the rectified signal to the armature coil of the rotor.

Numeral 416 designates a unit for detecting the positions of magnetic poles of the rotor, and includes, for example, Hall sensors (not shown) on the PT primary side of the stator box for detecting relative positions of the rotor and the stator. The resultant detection signal comes to appear as a positive or negative voltage and is amplified by an amplifier circuit 418. The voltage thus amplified is applied to a drive signal generation circuit 430 of a brushless motor making up a drive control circuit 428 on the one hand and to a first DC voltage generation circuit 420 at the same time.

The first DC voltage generation circuit 420 detects an output voltage from the amplifier circuit 418, and by differentiation and integration thereof, a DC voltage proportional to the rotational frequency of the rotor is produced. Numeral 422 designates a second DC voltage generation circuit for detecting a voltage of a predetermined frequency from the three-phase rectangular wave oscillation circuit 16 and, after differentiation and integration thereof, producing a DC voltage corresponding to the frequency. These two output voltages are applied directly to a comparator 424. The comparator 424 applies an output signal thereof to the drive control circuit 428 only when the voltage on rotor side is lower than that on the oscillation circuit side.

The drive control circuit 428 includes a drive signal generation circuit 430 for driving the motor 2 as a brushless motor, a drive signal generation circuit 426 for generating a drive signal to drive the motor 2 at sync speed, and a change-over switch 432. The change-over switch 432 operates in such a manner as to energize the drive signal generation circuit 430 for a brushless motor and the excitation drive circuits 22, 24 of the motor 2 in response to an output signal from the comparator 424 and to energize the excitation drive circuits 22, 24 and the drive signal generation circuit 426 for holding the rotation at sync speed when the voltages of the first and second DC voltage generation circuits 420,422 become equal to each other and an output signal from the comparator 424 ceases to be applied thereto.

A circuit diagram of an embodiment of the present invention is shown in Fig. 9.

A three-phase rectangular wave oscillation circuit 16 includes three operational amplifiers 461, 462 and 463. Magnetic pole position detection unit 416 includes three Hall sensors for detecting relative positions of the rotor and the stator, and the resulting position detection signal is applied to operational amplifiers 567 to 569.

A first DC voltage generation circuit 420 includes detection resistors 601 to 603 for detecting each output voltage of the operational amplifiers 567 to 569 as a triple voltage. The detection voltages of these resistors 601 to 603 are applied to the positive input terminal of the operational amplifier 604 and amplified, and after being differentiated by a capacitor 605 and a resistor 606, integrated by two capacitors 607, 608 and a resistor 609, converted into a DC voltage, and applied to the negative terminal of the comparator 424.

A second DC voltage generation circuit 422 includes resistors 621 to 623 for detecting each output voltage of the operational amplifiers 461 to 463 of the three-phase rectangular wave oscillation circuit 16 as a triple voltage. The resulting detection voltage is applied to the positive terminal of the operational amplifier 624 and amplified, and after being differentiated by a capacitor 625 and a resistor 626, integrated by capacitors 627, 628 and a resistor 629, converted into a DC voltage and applied to the positive terminal of the comparator 424.

As a result, the comparator 424 is supplied at the input terminal thereof with a voltage proportional to the rotational speed of the rotor and a voltage proportional to the frequency of the oscillation circuit 16 and produces a voltage at the output terminal thereof only when the rotational speed is lower than the oscillation frequency.

The drive control circuitl 428 includes three operational amplifiers 701 to 703, and has a positive input terminal thereof supplied with outputs of the operational amplifiers 461 to 463 of the oscillation circuit 16 and an output from the comparator 424. The negative terminal of the drive control circuit 428, on the other hand, is supplied with outputs from the operational amplifiers 567 to 568 of the magnetic pole position detection unit 416, etc. and a control signal is sent to the drive circuits 22, 24 in accordance with the above-mentioned functions. Numeral 432 designates a diode having the function of a change-over switch mentioned above by discharge operation.

In this circuit, assume that the power switch 401 is turned on. The transmission frequency of the three-phase rectangular wave oscillation circuit 16 immediately becomes a predetermined frequency, and a corresponding voltage is applied to the positive terminal of the comparator 424 through the second DC voltage generation circuit 422. Since the motor 2 is not yet driven, on the other hand, the voltage applied to the negative terminal of the comparator 424 through the first DC voltage generation circuit 420 is substantially zero. As a result, a voltage is generated at the output terminal of the comparator 424, and is applied through rectifiers SR1 to SR3 to the positive terminals of the operational amplifiers 701 to 703 of the drive control circuit 428. In view of the fact that the negative terminals of the operational amplifiers 701 to 703 are supplied with an output from the magnetic pole position detection unit 416, the motor 2 is started as a brushless motor.

Until the rotational speed of the motor 2 exceeds the oscillation frequency, the aforementioned condition is maintained. When the motor 2 reaches a sync speed, the output voltage of the comparator 424 becomes zero, and the voltage at the positive input terminal thereof is discharged through the rectifier 432. Since the operational amplifiers of the drive control circuit 428 are supplied with a drive signal for driving at sync speed, on the other hand, the motor 2 operates as a sync motor with the rotor thereof keeping the speed at the oscillation frequency. Also, after the operation is switched to a sync motor, the current portions unrequired for rotations are cut off in this circuit.

The present embodiment is applicable not only to the three-phase sync motor but also directly to the sync motor of other numbers of phases, in which case the detection resistor used in the DC voltage generation circuit in the aforementioned embodiment is appropriately changed in accordance with the number of phases.

As will be seen from the foregoing description, according to the embodiment under consideration, the motor 2 is driven as a brushless motor until the rotor reaches a sync speed, and after a sync speed is reached, the motor 2 proceeds to function as a sync motor of a predetermined frequency, and therefore it is possible to secure a sharp start-up taking advantage of the starting characteristics of the brushless motor while after reaching a sync speed, stable operation becomes possible with a easy speed adjustment.

Another embodiment of the present invention will be explained below.

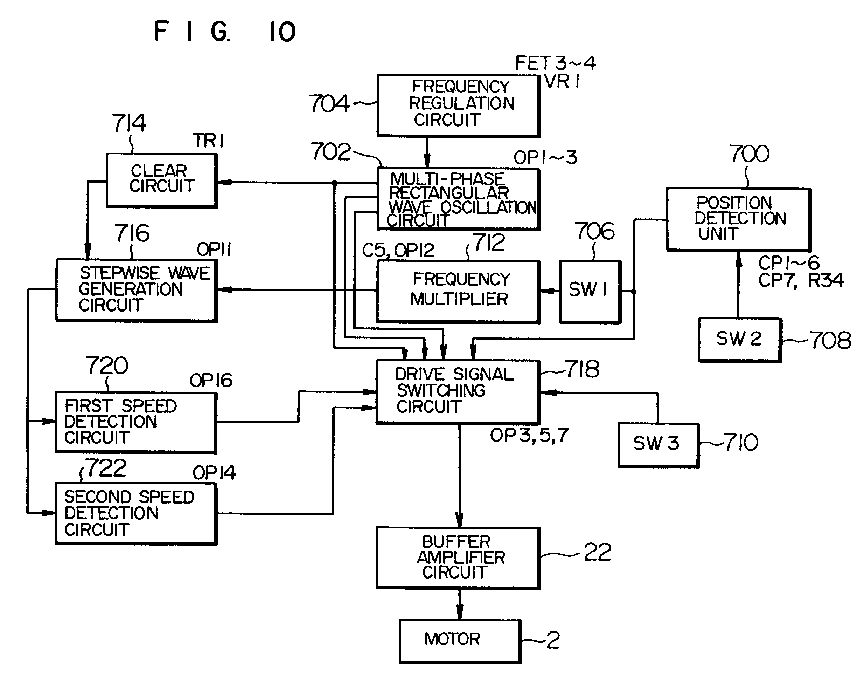

A block diagram showing a configuration of this embodiment of the present invention is shown in Fig. 10. In Fig. 10, numeral 2 designates a motor driven by a drive signal applied thereto through a buffer amplifier circuit 22, numeral 700 a position detection unit (CP1 to CP7, R34) for detecting the position of magnetic poles of the rotor of the motor 2 and producing a position signal, numeral 702 a multi-phase rectangular wave oscillation circuit (OP1 to OP3) for oscillating a multi-phase rectangular wave signal such as a three-phase rectangular wave signal, numeral 712 a frequency multiplier (C5, OP12) for multiplying the frequency of the position signal to a predetermined frequency and producing a multiple frequency signal, numeral 714 a clear circuit (Tr1) for producing a rectangular wave signal of a given phase of the multi-phase rectangular signal as a clear signal, numeral 716 a stepwise wave generation circuit (OP11) for producing a stepwise wave which changes stepwise with the same frequency as the multiple frequency in accorddance with the multiple frequency signal and cleared by the clear signal, numeral 718 a drive signal switching circuit (OP3 to OP7) for applying selected one of a signal corresponding to the position signal or a phase difference signal between the multi-phase rectangular wave signal and the position signal to the motor 2 as a drive signal, numeral 720 a first speed detection circuit (OP16) for producing a first signal before the level of the stepwise wave from the stepwise wave generation circuit 716 reaches a predetermined value, and a second signal when the predetermined value is reached, and numeral 710 instruction means (SW3) for selectively designating the validity or invalidity of the drive signal produced from the drive signal switching circuit 718. The drive signal switching circuit 718 produces a position signal thereby to operate the motor 2 as a brushless motor in response to a first signal and produces a phase difference signal thereby to operate the motor 2 as a sync motor in response to a second signal.

Until a predetermined speed is reached, therefore, the motor 2 is run in brushless mode on the basis of a signal corresponding to the position signal, and when the predetermined speed is reached, a sync operation is attained automatically by a drive signal prepared on the basis of the phase difference between the multi-phase rectangular oscillation signal and the phase difference signal.

Numeral 722 designates a second speed detection circuit (OP14) for producing a third signal when the level of the stepwise wave of the stepwise wave generation circuit 716 exceeds a predetermined value. The drive signal produced from the drive signal switching circuit 718 is rendered ineffective in response to the third signal. As a result, if the motor 2 increases in speed after being started and exceeds a predetermined speed level, the drive signal is automatically de-energized, so that the motor speed is decreased to a predetermined level thereby to attain a sync operation.

Numeral 706 designates a second instruction unit (SW1) interposed between the output of the position detection unit 700 and the input of the frequency multiplier 712 for giving an instruction to selectively prevent the position signal from being applied to the frequency multiplier 712, thus making it possible to run the motor 2 in brushless mode.

Numeral 708 designates a third instruction unit (SW2) for giving an instruction to selectively invert the phase of the position signal from the position detection unit 700 whereby the motor 2 is selectively driven in reverse direction.

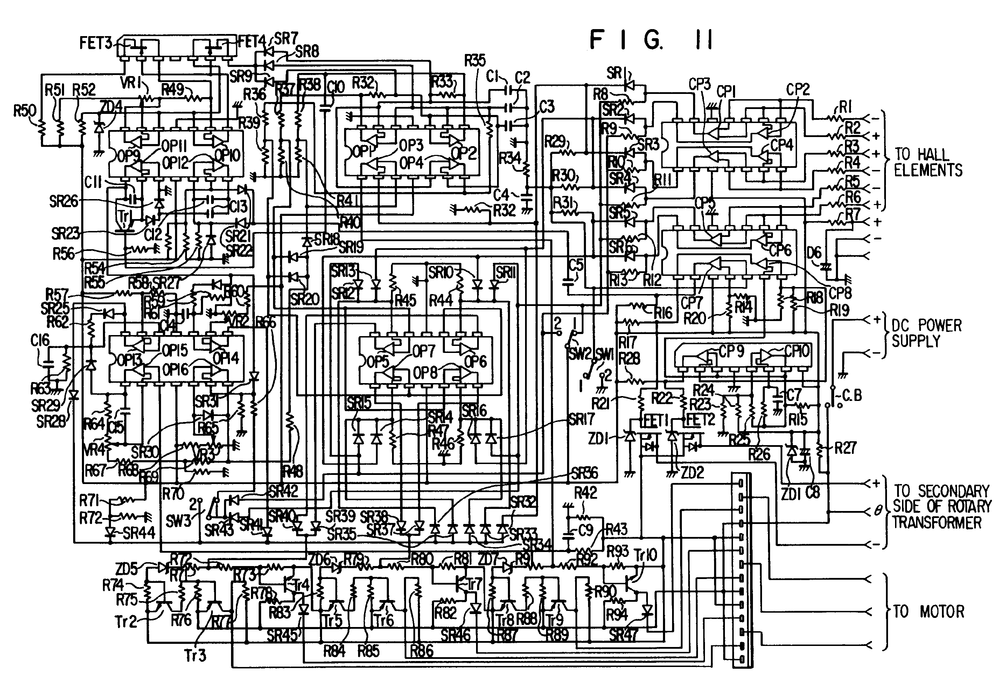

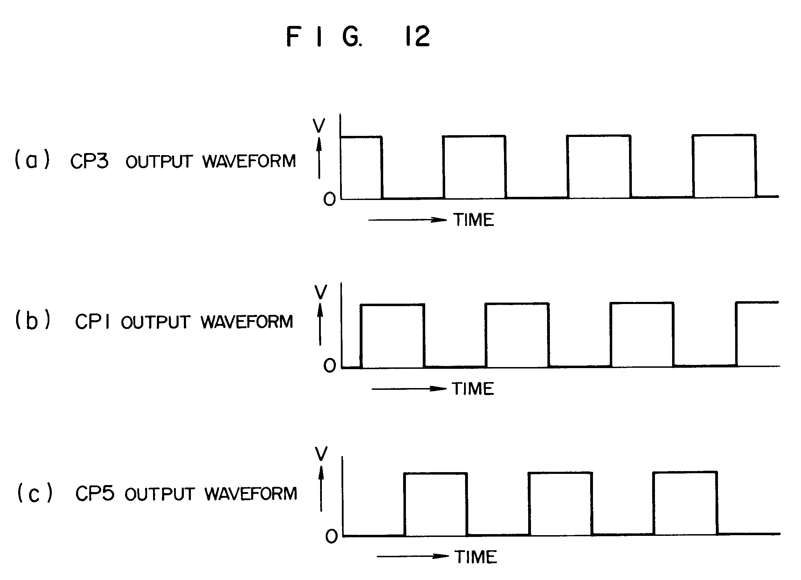

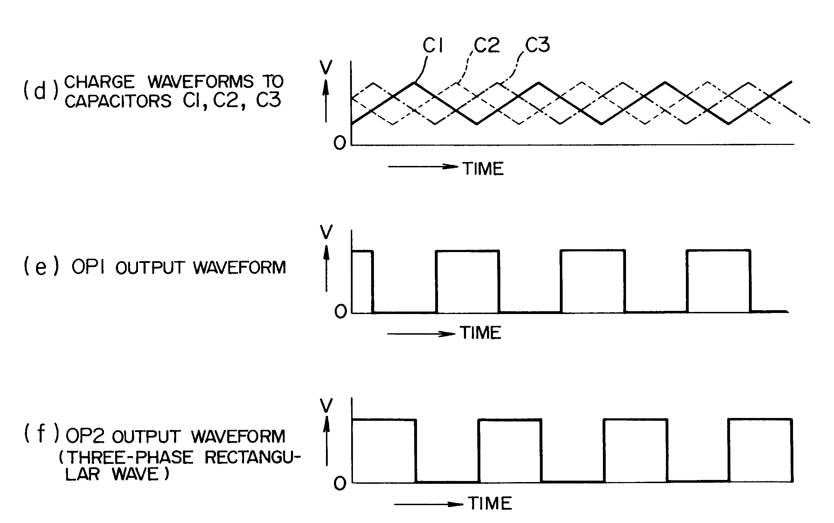

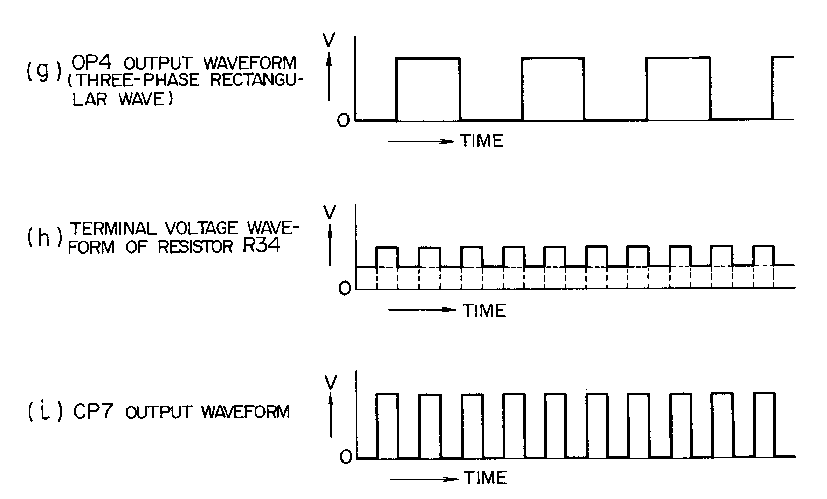

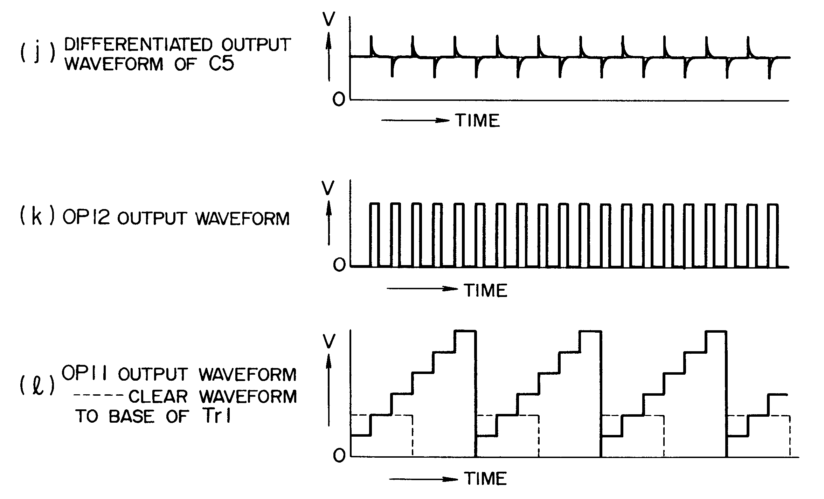

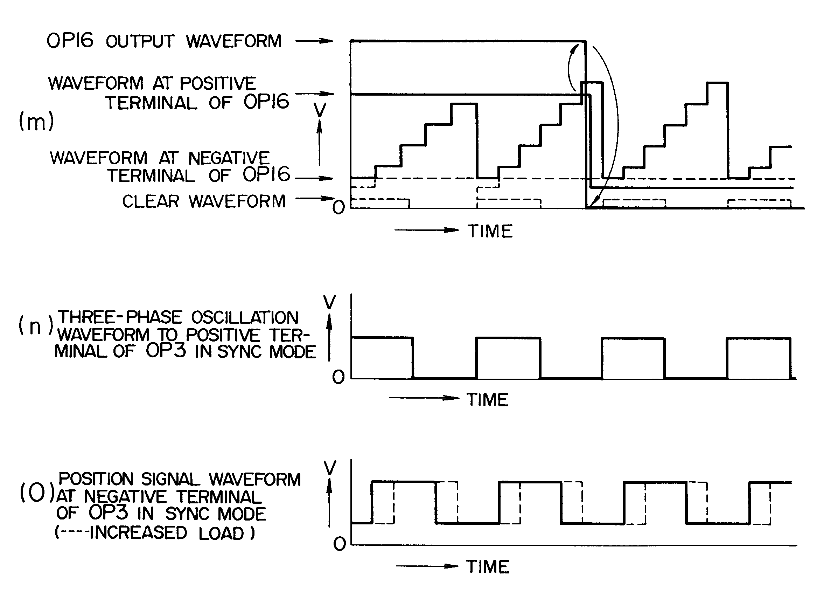

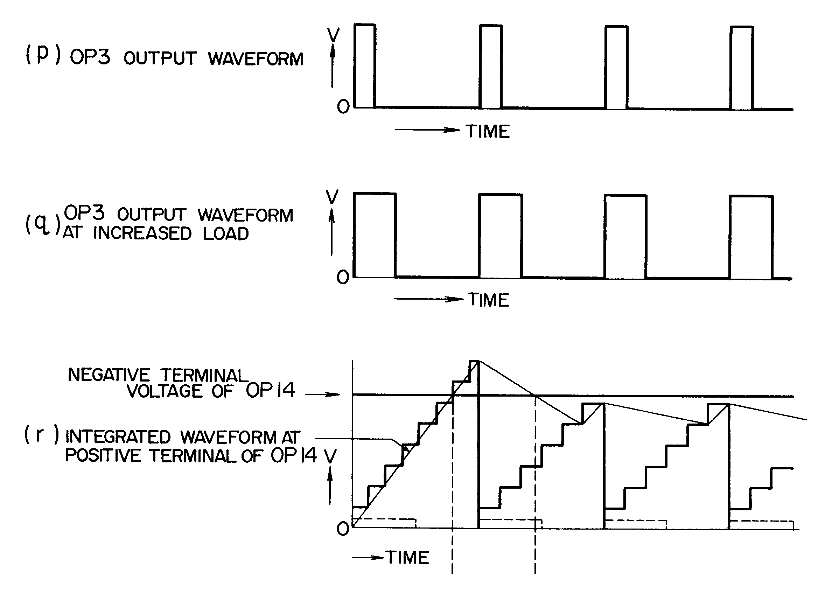

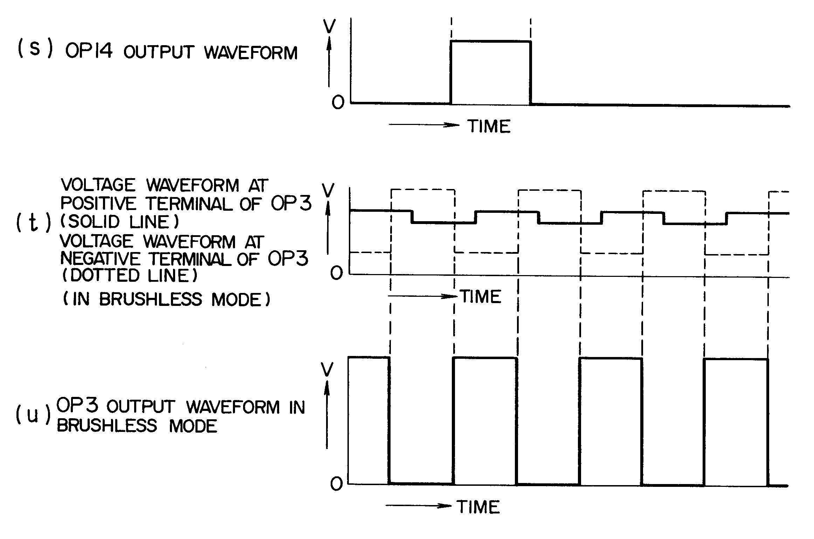

Now, this embodiment will be explained with reference to the circuit diagram shown in Fig. 11 and the signal waveforms of Fig. 12 produced at various parts in Fig. 11.

In Fig. 11, the motor position detector 700 such as a Hall element) is not shown. There are provided three Hall elements, for example, to apply a position detection signal to the resistors R1 to R6 each time of the 120-degree rotation of the rotor.

First, the motor 2 is connected to this system and power is thrown in. It is assumed that the switch SW1 is connected to a contact 1, the switch SW2 to the contact 2 and the switch SW3 to a contact 2.

When the switch SW1 is turned to the contact 2, the motor 2 is capable of being operated only in brushless mode, while if the switch SW2 is turned to the contact 1 side, the motor 2 is driven in reverse direction. When the switch SW3 is at contact 2, on the other hand, the motor 2 is stopped while when it is turned to contact 1 side, the motor 2 is started.

Each position-detecting Hall element is supplied with a voltage through a resistor R7, and a signal associated with a particular position produced from each Hall element is applied to the comparator CP1, CP2, CP3, CP4, CP5 or CP6. The open collector of each comparator is supplied with a source voltage through the switch SW2, and the comparators CP1, CP3 and CP5 are thus energized, thus applying a high-level or low-level signal associated with the signal to the diodes SR1, SR3 and SR5 respectively.

Output waveforms produced from the comparators CP1, CP3 and CP5 are shown in (a), (b) and (c) of Fig. 12 respectively. The comparators CP2, CP4 and CP6 to which no voltage is applied, however, remain de-energized. The operational amplifiers OP1, OP2 and OP4, upon oscillation ((e), (f) and (g) of Fig. 12), apply a three-phase rectangular wave to the resistors R36, R37 and R38 respectively. These frequencies are determined at a thermally stable level by a frequency regulation circuit 704 including a semi-fixed resistor VR1, operational amplifiers OP9, OP10 and transistors FET3, FET4.

Each of the three-phase rectangular waves is divided by half through the resistors R36, R37, R38, R39, R40 and R41 and applied to the positive terminals of the operational amplifiers OP3, OP5, OP6, OP7 and OP8. In view of the fact that the negative terminals of the operational amplifiers OP6 and OP8 are supplied with a source voltage through the switch SW2, diodes SR11 and SR17 and that the negative terminals of the operational amplifiers OP3, OP5, OP6, OP7 and OP8 are impressed with the source voltage through the contact 1 of the switch SW2, diode SR43, contact 2 of the switch SW3, and diodes SR32, SR33, SR34, SR35 and SR36, however, the output terminals of the operational amplifiers remain "low" and no voltage is applied to subsequent stages of the circuit even when a signal voltage is applied to the positive terminals of these operational amplifiers.

Now, assume that the switch SW3 is turned to the contact 1 from contact 2. The negative terminals of the operational amplifiers OP3, OP5, OP6, OP7 and OP8 are not supplied with a high voltage but a low voltage (a voltage slightly higher than the forward voltage of the diode) divided by the resistors R71 and R72. In this case, the voltage that has passed through the transistor SR43 is divided by the resistors R65 and R66, and this divided voltage (a voltage slightly higher than the forward voltage of the diode SR30) is applied to the negative terminal of the operational amplifier OP16.

The positive terminal of the operational amplifier OP16 is already impressed with a voltage (set to a level slightly lower than the upper voltage at the sixth stage of a stepwise wave mentioned later) divided by the resistor R68 and the semi-fixed resistor VR3, and therefore the output of the operational amplifier OP16 assumes a value near to the source voltage. The output voltage of the operational amplifier OP16 is applied to the positive terminals of the operational amplifiers OP3, OP5, OP6, OP7 and OP8 through the diodes SR18, SR19 and SR20, together with an oscillation rectangular wave voltage divided by the resistors R36, R37, R38, R39, R40 and R41 ((t) of Fig. 12). Since the negative terminals of the operational amplifiers OP6 and OP8 are impressed with a high voltage as described above, however, the output thereof remains at low level.

The negative terminals of the operational amplifiers OP3, OP5 and OP7, on the other hand, are supplied with a position signal ((t) of Fig. 12) indicating the position of the rotor of the motor 2. In this case, the maximum voltage of the position signal applied to the negative terminals are set always to a higher level than the maximum voltage applied to the positive terminals.

As a result, the operational amplifiers OP3, OP5 and OP7 produce signals ((e), (f), (g) and (u) of Fig. 12) 180° different in phase from the corresponding position signals ((a), (b) and (c) of Fig. 12), which signals are applied through a buffer amplifier circuit 22 to the motor 2 thereby to drive the motor 2 in the brushless mode. The motor 2 is thus increased rapidly in speed.

The position signal from the Hall elements are obtained as a three-phase rectangular wave voltage enlarged by the comparators CP1, CP3 and CP5. The voltages of these different phases are combined and divided by the resistors R29, R30, R31 and R34, thus producing low-frequency voltages three times the basic frequencies of respective phases ((h) of Fig. 12).

The capacitor C4 is used for removing noises. The terminal voltage of the resistor R34 is applied through the capacitor C2 to the positive terminal of the comparator CP7. The negative terminal of the comparator CP7 is impressed with a voltage equivalent to the rectangular wave voltage applied to the positive terminal as divided by about half through the resistors R14 and R20. As a result, the comparator CP7 produces as an output a high voltage ((i) of Fig. 12) of a frequency three times higher than the basic frequency of the rectangular wave. This voltage is differentiated by the capacitor C5, diodes SR21, SR22 and the resistors R54 and R55 ((j) of Fig. 12) and applied as a pulse wave to the positive and negative terminals of the operational amplifier OP12.

The circuit of the operational amplifier OP12 is designed as a bidirectional monostable multivibrator, and therefore produces a pulse of rectangular wave ((k) of Fig. 12) at the time of rise and fall of the input pulse wave. As a result, a rectangular wave of a frequency double that of the pulse wave applied to the operational amplifier OP12 is produced. In other words, a rectangular wave having a frequency six times higher than that of the position signal is obtained.

This rectangular wave is applied through the capacitor C12, and diodes SR23, SR26 to the positive and negative terminals of the operational amplifier OP11. The operational amplifier OP11, capacitor C11, etc. make up the stepwise wave generation circuit 716. The voltage value of each step of this stepwise wave is determined by the ratio between the values of the capacitors C11 and C13.

The transistor Tr1 used in this circuit is for clearing the stepwise wave, and the base thereof is supplied with a clear signal resulting from the rectangular wave of a phase of the three-phase rectangular oscillation wave differentiated by a differentiator including the capacitor C10 and the resistor R56.

The transistor Tr1 is thus turned on by a period of a phase of the rectangular wave, and the capacitor C11 is discharged thereby to clear the stepwise wave. The waveform indicated by dotted line in (1) of Fig. 12 represents a clear signal applied to the base of the transistor Tr1.

When the rotational speed of the motor 2 is lower than the oscillation frequency of the rectangular wave, therefore, the maximum number of steps is small, which number progressively increases with the increase in rotational speed of the motor 2. When the oscillation frequency thus becomes equal to the rotational frequency, the maximum number of steps is six.

In the case where the rotational frequency exceeds the oscillation frequency, on the other hand, the maximum number of steps is more than six. Only the period of the clear signal changes with the oscillation frequency, and the voltage or period of the voltage of each step of the stepwise wave remains unchanged. In other words, the period of the stepwise wave is proportional to the frequency of the position signal. This stepwise wave is applied through the diode SR31 to the negative terminal of the operational amplifier OP16. Since this terminal is impressed with a voltage divided by the resistors R65 and R66 as mentioned above, however, a combination of the divided voltage and the stepwise wave ((m) of Fig. 12) is applied to the negative terminal of the operational amplifier OP16. The positive terminal of the operational amplifier OP16, on the other hand, is supplied with an upper voltage ((m) of Fig. 12) at the sixth stage of the stepwise wave as mentioned above. Thus the output voltage of the operational amplifier OP16 is at high level, and is applied to the positive terminals of the operational amplifiers OP3, OP5, OP6, OP7 and OP8. As a consequence, as mentioned above, the operational amplifiers OP3, OP5 and OP7 produce signals 180° displaced from the position signal to drive the motor 2.

With the increase in the rotational speed of the motor 2 from start with such a rapidity as mentioned above, the number of steps of the stepwise wave steadily increases to six. In this stage, the oscillation frequency becomes equal to the rotational frequency. Specifically, when a designated rotational speed is reached, the potential at the positive terminal of the operational amplifier OP16 becomes higher than that at the negative potential thereof, so that the output of the operational amplifier OP16 becomes "low" ((m) of Fig. 12), and the high voltages thus far applied to the positive terminals of the operational amplifiers OP3, OP5, OP6, OP7 and OP8 are removed, thereby producing a three-phase rectangular wave oscillation signal alone.

The motor 2 is thus driven by a three-phase rectangular wave as a sync motor. In this case, the phase rotation of the three-phase oscillation signal is designed to be identical to that of the rotor.

Each positive terminal of the operational amplifiers OP3, OP5 and OP7 is supplied with an oscillation rectangular wave ((h) of Fig. 12), and each negative terminal thereof with a position signal ((o) of Fig. 12). As a result, when the rotor rotates to a predetermined position, a corresponding Hall element is detected and a position signal is generated thereby to reduce a corresponding output of the operational amplifiers OP3, OP5 and OP7 to low level. This position signal waveform changes has a phase changing with the load as shown by dotted line of (o) of Fig.12 (the phase being retarded with the increase in load), and therefore the pulse duration of the output waveforms of the operational amplifiers OP3, OP5 and OP7 is short against a light load ((p) of Fig. 12) and longer against an increased load ((q) of Fig. 12).

This operation improves the efficiency of the motor current in low speed ranges of a sync motor, while at the same time greatly reducing the counter-torque force, with the result that the torque is increased for an improved response and the following ability of the motor 2.

In the transition from brushless mode to sync operation mode, if the motor 2 exceeds a predetermined rotational speed (sync speed) by inertia, an out-of-phase condition would occur, and the motor 2 would be intermittently driven in brushless mode by a three-phase oscillation rectangular wave at higher than a sync speed. The stepwise wave, on the other hand, is divided and integrated by the diode SR24, resistors R59, R61 and the capacitor C14 and applied to the positive terminal of the operational amplifier OP14, the negative terminal of which is supplied with a voltage value slightly higher than the value of the sixth step of the stepwise wave by the resistor R60 and the semi-fixed resistor VR2 ((r) of Fig. 12). As a result, the output of the operational amplifier 14 remains at low level unless the integrated voltage applied to the positive terminal thereof exceeds the voltage applied to the negative terminal thereof. In spite of the requirement to switch to the sync mode when the motor 2 started in brushless mode increases in speed with rapidity and reaches a specified rotational speed, however, assume that the specified rotational speed is exceeded while the motor 2 is driven intermittently in brushless mode by the inertia of the rotor and load. The integrated voltage at the positive terminal exceeds the voltage at the negative terminal, and therefore the output of the operational amplifier OP14 is increased to high level ((r) of Fig. 12). The output voltage of the operational amplifier OP14 ((s) of Fig. 12) is then applied through the diodes SR41, SR32, SR33, SR34, SR35 and SR36 to the negative terminals of the operational amplifiers OP3, OP5, OP6, OP7 and OP8, so that the output of each operational amplifier is reduced to low level and the motor current interrupted for a reduced speed thereof.

When the motor speed is reduced to a specified level, the output voltage of the operational amplifier OP14 is restored to low level, and the motor 2 is re-energized for stable sync operation at a specified rotational speed.

If some load trouble occurs during the sync operation and the motor 2 steps out, on the other hand, the control system starts an intermittent operation in brushless mode as mentioned above and increases the motor speed, subsequently followed by restoration of the sync speed automatically.

As mentioned above, the motor 2 rises in speed rapidly in brushless mode and is switched to the sync speed accurately at a specified rotational speed. At the same time, the efficient operation is maintained in correspondence to the load variations.

When the motor 2 reaches a specified sync rotational speed, the output of the operational amplifier OP16 is reduced to low level, and therefore the voltage at the positive terminal thereof assumes a status lower than the negative terminal voltage thereof equivalent to the forward voltage of the diode SR30 through the diode SR30. Thus the voltage level of the stepwise wave applied to the negative terminal, no matter how it changes, is higher than the forward voltage to the positive terminal and therefore the output is maintained at low level.

Now, assume that the contact 1 of the switch SW2 is turned to the contact 2 thereof. The comparators CP2, CP4 and CP6 are energized, and the position detection signal is inverted by 180 degree in phase. At the same time, the operational amplifiers OP6 and OP8 are turned on, with the result that the motor 2 is started in reverse direction.

If the contacts of the switch SW2 are switched during the motor operation, the voltages at the contacts 1 and 2 are reduced to zero the instant of switching. The voltage applied to the negative terminals of the operational amplifiers after being divided through the diodes SR42, SR43 and the resistors R65, R66, therefore, is also reduced to zero lower than the voltage at the positive terminals (forward voltage of the diode SR30), with the result that the output of the operational amplifier OP16 is increased to high level. The brushless mode is thus entered with the motor 2 rising rapidly in opposite direction. In other words, the switching between forward and reverse drives of the motor 2 can be achieved within a short time by switching the contacts of the switch SW2.

If the power supply is connected to the contact 2 of the switch SW1, contact 1 of the switch SW2 or the contact 2 of the switch SW3, the motor 2 is not started as mentioned above.

Under this condition, if the switch SW3 is turned to the contact 1, on the other hand, the motor 2 is rapidly started in brushless mode and accelerated as mentioned above. Since rectangular wave voltage three times higher than the rotational frequency generated at the resistor R34 is shorted to the earth, however, no signal is transmitted to the circuit components including and subsequent to the comparator CP7. As a result, the integrated voltage is not applied to the positive terminal of the operational amplifier OP14, the output of which remains at low level. The operational amplifier OP16, the negative terminal of which is not supplied with a stepwise wave, continues to produce a high level signal. The motor 2 is thus kept in operation in brushless mode at a speed corresponding to the load.

As explained above, the start, stop, brushless mode, sync mode and forward and reverse rotations of the motor 2 are easily selected freely by the switches SW1, SW2 and SW3. Further, even if the oscillation frequency fluctuates immediately after power is thrown in, the oscillation frequency is stablized by starting the motor 2 with the switch SW3 turned to contact 1, thereby eliminating the problem of unstable oscillation frequency in the transition from brushless to sync modes.

Now, a safety circuit will be described briefly.

The load current and the drive current of the motor 2 flow through the resistor R42 (the resistance value of which is set to about one divided by ten and several ohms). These voltage are detected, and after being smoothed by the resistor R43 and the capacitor C9, are applied to the positive terminal of the operational amplifier OP15. The voltage applied to the positive terminal of the operational amplifier OP15 is enlarged to a predetermined level, integrated and produced as an output thereof. This output is applied to the positive terminal of the operational amplifier OP13 through the diode SR29. The negative terminal of the operational amplifier OP13, on the other hand, is impressed with a voltage divided by the resistors R57 and R58. When the output voltage of the operational amplifier OP15 exceeds the divided voltage, the output of the operational amplifier OP13 is increased to high level.

The high-level output voltage of the operational amplifier OP13 is applied to the negative terminals of the operational amplifiers OP3, OP5, OP6, OP7 and OP8 through the diodes SR28, SR32, SR33, SR34, SR35 and SR36, so that the output of each operational amplifier is reduced to low level and the drive current is cut off thereby to stop the motor 2. The output voltage of the operational amplifier OP13 is applied also through the diode SR25, divided by the resistors R62 and R63 and applied to the positive terminal of the operational amplifier OP13. This divided voltage is higher than the voltage applied to the negative terminal thereof, and therefore even when the output voltage of the operational amplifier OP15 is reduced, the output of the operational amplifier OP13 is kept at high level. The capacitor C16 is for keeping the output of the operational amplifier OP13 at high level.

This condition is terminated by disconnecting the power supply. The safety circuit, through which a large current flows at the start of the motor 2, may inconveniently develop a false operation. In order to prevent such an inconvenience, the negative terminal of the operational amplifier OP15 is supplied with a voltage appropriately divided by the resistors R69 and R70 while the output of the operational amplifier OP16 remains at high level (at the time of start) thereby to suppress the output of the operational amplifier OP15 at low level, while the normal state is restored after start is completed.

As described above, according to the present embodiment, until a predetermined speed is reached, the motor 2 is switched to the brushless mode by a drive signal prepared on the basis of a signal corresponding to a position signal, and when the predetermined speed is reached, the motor 2 is switched automatically in stable manner from the brushless to the sync mode by a drive signal produced on the basis of a phase difference signal between a multi-phase rectangular oscillation wave and a position signal.

In the sync operation mode, therefore, the phase of the position signal is changed with the load fluctuation, if any, so that the pulse duration of the drive signal varies in accordance with the load variations, thus attaining a stable sync operation.

Further, in the case where the motor 2, gathering speed after start and exceeding a predetermined speed (sync speed), is intermittently driven in brush-less mode, the drive signal is automatically turned off, and when the predetermined speed is reached by deceleration, the drive signal is supplied again, thus assuring transition to the sync operation mode without fail.

Furthermore, the forward or reverse rotation of the motor 2 can be freely selected and switched smoothly. It is also possible to run the motor 2 only in brushless mode.

## Claims

1. A control system for a sync motor, comprising:
a multi-phase sync motor (2);
a multi-phase rectangular wave oscillation circuit (16); and
means (416) for detecting the position of magnetic poles of the rotor of said multi-phase sync motor and producing a position signal, characterized by
a first DC voltage generation circuit (420) for generating a DC voltage proportional to the rotational frequency of the rotor;
a second DC voltage generation circuit (422) for generating a DC voltage corresponding to a predetermined frequency from said multi-phase rectangullar oscillation circuit;
a comparator circuit (424) for comparing output signals of said first and second DC voltage generation circuits and producing an output signal only when the DC voltage of the latter exceeds that of the former
a drive control circuit (428) for producing a signal causing the excitation drive circuit of said motor to drive said motor as a brushless motor in accordance with an output signal from said magnetic pole position detection means in the presence of an output signal supplied from said comparator circuit, said drive control circuit causing said excitation drive circuit of the motor to produce a signal for driving the motor as a sync motor in accordance with an output signal from said multi-phase rectangular wave oscillation circuit in the absence of an output signal supplied from said comparator circuit.

2. A control system for a sync motor, comprising:
a motor (2);
means (700, CP1 to CP7, R34) for detecting the position of the magnetic poles of the rotor of the motor and producing a position signal;
a multi-phase rectangular wave oscillation circuit (702, OP1 to OP3) for oscillating a multi-phase rectangular wave; and
a frequency multiplier (712, C5, OP12) for multiplying the frequency of said position signal to a predetermined frequency and producing a multiple frequency signal characterized by
a clear circuit (714, Tr1) for producing a phase of said multi-phase rectangular wave signal as a clear signal;
a stepwise wave generation circuit (716, OP11) for generating a stepwise wave adapted to be cleared by said clear signal, said stepwise wave being changed stepwisely with the same frequency as said multiple frequency in accordance with said multiple frequency signal;
a drive signal switching circuit (718, OP3 to OP7) for applying to said motor as a drive signal selected one of a signal corresponding to said position signal and a phase difference signal between said multi-phase rectangular wave signal and said position signal;
a speed detection circuit (720, OP16) for producing a first signal before the level of the step-wise wave from said stepwise wave generation circuit reaches a predetermined value, and a second signal when said level reaches the predetermined value; and
means (710, SW3) for designating selected one of validity and invalidity of the drive signal produced from said drive signal switching circuit;
said drive signal switching circuit producing a signal corresponding to the position signal in response to said first signal thereby to drive said motor in brushless mode, and said phase difference signal in response to said seconds signal thereby to drive said motor in sync mode.

3. A control system according to Claim 2, further comprising a second speed detection circuit (722, OP14) for producing a third signal when the level of the stepwise wave from said stepwise wave generation circuit exceeds a predetermined value, the drive signal from said drive signal switching circuit being invalidated in response to said third signal.

4. A control system according to Claim 2, further comprising second instruction means (706, SW1) interposed between the output of said position detection means and the input of said multiplier for giving an instruction to prevent said position signal selectively from being applied to said multiplier thereby making it possible to operate said motor only in brushless mode.

5. A control system according to Claim 2, further comprising third instruction means (708, SW2) for giving an instruction to invert the phase of the position signal from said position detection means selectively, thereby making it possible to drive said motor in opposite direction selectively.

6. A control system according to Claim 2, wherein a signal corresponding to said position signal is 180 degree different in phase from said position signal.

## Patentansprüche

1. Regelsystem für einen Synchronmotor, das
einen Mehrphasensynchronmotor (2),
eine Mehrphasenrechteckwellen-Oszillatorschaltung (16) und
eine Vorrichtung (416) zum Erfassen der Lage von Magnetpolen des Rotors des Mehrphasensynchronmotors und zum Erzeugen eines Lagesignals aufweist, gekennzeichnet durch
eine erste Gleichspannungsgeneratorschaltung (420) zum Erzeugen einer zur Umlauffrequenz des Rotors proportionalen Gleichspannung,
eine zweite Gleichspannungsgeneratorschaltung (422) zum Erzeugen einer Gleichspannung, die einer vorbestimmten Frequenz aus der Mehrphasenrechteckwellen-Oszillatorschaltung entspricht,
eine Vergleicherschaltung (424), die die Ausgangssignale der ersten und der zweiten Gleichspannungsgeneratorschaltung vergleicht und ein Ausgangssignal nur dann erzeugt, wenn die Gleichspannung der letzteren diejenige der ersteren übersteigt, und
eine Antriebssteuerschaltung (428), die bei dem Vorliegen eines aus der Vergleicherschaltung zugeführten Ausgangssignals ein Signal erzeugt, welches an der Erregungstreiberschaltung des Motors das Betreiben des Motors als bürstenloser Motor entsprechend einem Ausgangssignal aus der Magnetpollage-Erfassungsvorrichtung bewirkt, wobei die Antriebssteuerschaltung bei dem Fehlen eines aus der Vergleicherschaltung zugeführten Ausgangssignals bewirkt, daß die Erregungstreiberschaltung des Motors ein Signal für das Betreiben des Motors als Synchronmotor entsprechend einem Ausgangssignal aus der Mehrphasenrechteckwellen-Oszillatorschaltung erzeugt.

2. Regelsystem für einen Synchronmotor, das
einen Motor (2),
eine Einrichtung (700, CP1 bis CP7, R34) zum Erfassen der Lage der Magnetpole des Rotors des Motors und zum Erzeugen eines Lagesignals,
eine Mehrphasenrechteckwellen-Oszillatorschaltung (702, OP1 bis OP3) zum Erzeugen einer mehrphasigen Rechteckwelle und
einen Frequenzvervielfacher (712, C5, OP12) zum Vervielfachen der Frequenz des Lagesignals auf eine vorbestimmte Frequenz und zum Erzeugen eines Vielfachfrequenzsignals aufweist, gekennzeichnet durch
eine Löschschaltung (714, Tr1) zur Abgabe einer Phase des Mehrphasenrechteckwellensignals als Löschsignal,
eine Treppenwellen-Generatorschaltung (716, OP11) zum Erzeugen einer durch das Löschsignal rückstellbaren Treppenwelle, die entsprechend dem Vielfachfrequenzsignal stufenweise mit der gleichen Frequenz wie die Vielfachfrequenz geändert wird,
einen Antriebssignal-Schaltkreis (718, OP3 bis OP7), der an den Motor als Antriebssignal ein gewähltes Signal anlegt, welches dem Lagesignal oder einer Phasendifferenz zwischen dem Mehrphasenreckteckwellensignal und dem Lagesignal entspricht,
eine Drehzahlmeßschaltung (720, OP16), die ein erstes Signal, bevor der Pegel der Treppenwelle aus der Treppenwellen-Generatorschaltung einen vorbestimmten Wert erreicht, und ein zweites Signal erzeugt, wenn der Pegel den vorbestimmten Wert erreicht und
eine Einrichtung (710, SW3) zum Wählen der Gültigkeit oder der Ungültigkeit des von dem Antriebssignalschaltkreis abgegebenen Antriebssignals,
wobei der Antriebssignalschaltkreis im Ansprechen auf das erste Signal ein dem Lagesignal entsprechendes Signal abgibt, um dadurch den Motor als bürstenloser Motor zu betreiben, und im Ansprechen auf das zweite Signal das Phasendifferenzsignal abgibt, um dadurch den Motor als Synchronmotor zu betreiben.

3. Regelsystem nach Anspruch 2, das ferner eine zweite Drehzahlmeßschaltung (722, OP14) aufweist, die ein drittes Signal erzeugt, wenn der Pegel der Treppenwelle aus der Treppenwellen-Generatorschaltung einen vorbestimmten Wert übersteigt, wobei im Ansprechen auf das dritte Signal das Antriebssignal aus dem Antriebssignalschaltkreis ungültig gemacht wird.

4. Regelsystem nach Anspruch 2, das ferner eine zwischen den Ausgang der Lageerfassungseinrichtung und den Eingang des Vervielfachers geschaltete zweite Befehlseinrichtung (706, SW1) aufweist, die einen Befehl zum Verhindern des selektiven Anlegens des Lagesignals an den Vervielfacher abgibt, um dadurch das Betreiben des Motors allein als bürstenloser Motor zu ermöglichen.

5. Regelsystem nach Anspruch 2, das ferner eine dritte Befehlseinrichtung (708, SW2) aufweist, die selektiv einen Befehl zum Invertieren der Phase des Lagesignals aus der Lageerfassungseinrichtung abgibt, um dadurch das selektive Betrieben des Motors in der Gegenrichtung zu ermöglichen.

6. Regelsystem nach Anspruch 2, bei dem ein dem Lagesignal entsprechendes Signal gegenüber dem Lagesignal um 180° phasenverschoben ist.

## Revendications

1. Un système de commande d'un moteur synchrone, comprenant :
un moteur synchrone polyphasé (2); un circuit d'oscillation à ondes rectangulaires, polyphasé (16); et
un moyen (416) pour détecter la position des pôles magnétiques du rotor dudit moteur synchrone polyphasé et produire un signal de position, caractérisé par :
un premier circuit de génération de tension continu (420), destiné à générer une tension continue proportionnelle à la fréquence de rotation du rotor;
un deuxième circuit de génération de tension continu (422), pour générer une tension continue correspondant à une fréquence pré-déterminée à partir dudit circuit d'oscillation à ondes rectangulaires polyphasé;
un circuit comparateur (424), pour comparer des signaux de sortie venant desdits premiers et deuxièmes circuits de génération de tension continue et produire un signal de sortie seulement lorsque la tension continue de ce dernier dépasse celle du premier;
un circuit de commande d'entraînement (428) destiné à produire un signal provoquant l'excitation du circuit commande dudit moteur afin d'entraîner ledit moteur qui est réalisé sous forme de moteur sans balais, selon un signal de sortie venant dudit moyen de détection de position de pôle magnétique, en présence d'un signal de sortie appliqué depuis ledit circuit comparateur, ledit circuit de commande d'entraînement provoquant ladite excitation du circuit d'entraînement du moteur afin de produire un signal destiné à commander le moteur en moteur synchrone, en fonction d'un signal de sortie venant dudit circuit d'oscillation à ondes rectangulaires polyphasé, en absence d'un signal de sortie fournit depuis ledit circuit comparateur.

2. Un système de commande d'un moteur synchrone, comprenant :
un moteur (2); des moyens (700, CP1 à CP7, R34) pour détecter la position des pôles magnétiques du rotor du moteur et produire un signal de position;
un circuit d'oscillation à ondes rectangulaires polyphasé (702, OP1 à OP3) pour produire par oscillation une onde rectangulaire polyphasée; et
un multiplicateur de fréquence (712, C5 à OP12) pour multiplier la fréquence dudit signal de position et atteindre une fréquence prédéterminée et produire un signal de fréquence multiple, caractérisé par
un circuit de libération (714, TR1) destiné à produire une phase dudit signal en ondes rectangulaires polyphasées à titre de signal de libération;
un circuit de génération d'ondes fonctionnant par degré (716, OP11), pour générer par degré une onde adaptée, pour être libérée par ledit signal de libération, ladite onde réalisée par degré étant modifiée par degré à la même fréquence que ladite fréquence multiple en fonction dudit signal de fréquence multiple;
un circuit de commutation de signal d'entraînement (718, OP3 à OP7), destiné à appliquer audit moteur à titre de signal de commande sélectionné un signal correspondant audit signal de position et un signal de différence de phase, entre ledit signal à ondes rectangulaires polyphasées et ledit signal de position;
un circuit de détection de vitesse (720, OP16) pour produire un premier signal, avant le niveau de l'onde évoluant par degré par le circuit de génération d'ondes par degré que le niveau atteigne une valeur prédéterminée, et un deuxième signal lorsque ledit niveau atteint la valeur prédéterminée; et
un moyen (710, SW3) pour désigner quel est l'état de validité ou d'invalidité sélectionné du signal de commande produit par ledit circuit de commutation de signal d'entraînement;
ledit circuit de commutation de signal de commande produisant un signal correspondant au signal de position en réponse audit premier signal, de manière à commander ledit moteur en mode sans balais, et ledit signal de différence de phase en réponse audit deuxième signal de manière à commander ledit moteur en mode synchrone.

3. Un système de commande selon la revendication 2, comprenant en outre un deuxième circuit de détection de vitesse (722, OP14), pour produire un troisième signal lorsque le niveau de l'onde évoluant par degré sous la commande du circuit de génération d'ondes fonctionnant par degré dépasse une valeur prédéterminée, le signal de commande venant dudit circuit de commutation de signal de commande étant invalidé en réponse audit troisième signal.

4. Un système de commande selon la revendication 2, comprenant en outre un deuxième moyen d'instruction (706, SW1) interposé entre la sortie dudit moyen de détection de position et l'entrée dudit multiplicateur afin de donner une instruction pour empêcher ledit signal de position d'être sélectivement appliqué audit multiplicateur de manière à rendre possible le fonctionnement dudit moteur seulement en mode sans balais.

5. Un système de commande selon la revendication 2, comprenant en outre un troisième moyen d'instruction (708, SW2) pour donner une instruction destinée à inverser la phase du signal de position venant dudit moyen de détection de position, de façon sélective, de manière à rendre possible la commande dudit moteur sélectivement dans un sens de rotation opposé.

6. Un système de commande selon la revendication 2, dans lequel un signal correspondant audit signal de position est déphasé de 180° par rapport audit du signal de position.
